# EUROPEAN PATENT APPLICATION

(11) **EP 4 534 569 A1**
(43) Date of publication of application: **09.04.2025**
(21) Application number: 24201869.5
(22) Date of filing: 23.09.2024
(51) Int. Cl.: C08F 8/12

(54) **METHOD AND SYSTEM OF MANUFACTURING ETHYLENE VINYL ALCOHOL COPOLYMER**

(30) Priority: 06.10.2023 KR 20230133220
(71) Applicant: Hanwha TotalEnergies Petrochemical Co., Ltd., Seosan-si, Chungcheongnam-do 31900 (KR)
(72) Inventor: KIM, Kwang In, 31900 SEOSAN-SI (KR); SEO, Seok Kyoo, 31900 SEOSAN-SI (KR); KIM, Joong Yeon, 31900 SEOSAN-SI (KR)
(74) Representative: Regimbeau

(57) **Abstract**

Disclosed are a method of preparing an ethylene vinyl alcohol copolymer comprising hydrolyzing an ethylene vinyl acetate copolymer in the presence of a catalyst in a solvent containing alcohol and water to prepare a reaction product containing an ethylene vinyl alcohol copolymer, and a system for preparing an ethylene vinyl alcohol copolymer.

## Description

### BACKGROUND

### 1. Field

Embodiments of the present disclosure relate to a method and system for preparing an ethylene vinyl alcohol copolymer.

### 2. Description of the Related Art

An ethylene vinyl alcohol copolymer is processed into a wide range of films, sheets, containers, and fibers, and utilized in a variety of applications such as packaging of fresh foods, and automobile gasoline tanks owing to excellent gas barrier properties, solvent resistance, and mechanical strength thereof.

A conventional method of industrially preparing an ethylene vinyl alcohol copolymer includes first synthesizing an ethylene vinyl acetate copolymer by radical solution polymerization using vinyl acetate and ethylene as raw materials, and then reacting the ethylene vinyl acetate copolymer with alcohol to prepare the ethylene vinyl alcohol copolymer.

However, this method of preparing an ethylene vinyl alcohol copolymer has two major limitations. First, since transesterification between the ethylene vinyl acetate (EVA) copolymer and alcohol is a reversible reaction, alkyl acetate obtained as a by-product should be continuously removed in order to increase the conversion rate of ethylene vinyl alcohol (EVOH) copolymer. For this reason, a reactive distillation column (RDC) capable of performing reaction/distillation simultaneously is used for commercial processes such as a Kuraray process. The other limitation is that high pressure and high temperature conditions are required in order for an ethylene vinyl alcohol copolymer with a high conversion rate to be present in a solution state rather than precipitating in the reaction distillation column.

For this reason, a conventional process of preparing an ethylene vinyl alcohol copolymer using an ethylene vinyl acetate copolymer has difficulties and drawbacks.

The information disclosed in this section is provided only for enhancement of understanding of the background of the present disclosure and therefore it may contain information that does not form the prior art.

### SUMMARY

Embodiments of the present disclosure provide a method of preparing an ethylene vinyl alcohol copolymer through hydrolysis, which is a reaction between an ethylene vinyl acetate copolymer and water, in an aqueous solution, without transesterification, which is a reaction between the ethylene vinyl acetate copolymer and alcohol.

A method of preparing an ethylene vinyl alcohol copolymer according to an embodiment of the present disclosure includes hydrolyzing an ethylene vinyl acetate copolymer in the presence of a catalyst in a solvent containing alcohol and water to prepare a reaction product containing an ethylene vinyl alcohol copolymer.

The hydrolysis may be performed without precipitation at a temperature of 90°C or lower.

The catalyst may include at least one selected from the group consisting of alkali metal hydroxide, alkali metal alkoxide, alkali metal alkylate, alkali metal alcoholate, and carboxylic acid.

The alcohol may be a C1 to C4 alcohol.

The solvent may contain alcohol and water at a weight ratio of 3:1 to 3:5.

The ethylene vinyl acetate copolymer may be added in an amount of 10 to 50 parts by weight based on 100 parts by weight of the solvent.

The ethylene vinyl acetate copolymer may have a weight average molecular weight (Mw) of 50,000 g/mol to 500,000 g/mol.

The ethylene vinyl acetate copolymer may contain 20 mol% to 40 mol% of ethylene and 60 mol% to 80 mol% of vinyl acetate.

The hydrolysis may be performed at a temperature of 50°C to 80°C.

The hydrolysis may be performed at a pressure of 1 bar to 3 bar.

The ethylene vinyl alcohol copolymer may contain 20 mol% to 40 mol% of ethylene and 60 mol% to 80 mol% of vinyl alcohol.

A conversion rate of the ethylene vinyl alcohol copolymer may be 90% or more.

The ethylene vinyl alcohol copolymer may be present in a liquid phase in the reaction product.

The method may further include separating the ethylene vinyl alcohol copolymer from the reaction product.

A system for preparing an ethylene vinyl alcohol copolymer according to another embodiment of the present disclosure includes a reactor configured to receive a solvent containing alcohol and water, and an ethylene vinyl acetate copolymer and to hydrolyze the ethylene vinyl acetate copolymer in the solvent in the presence of a catalyst to prepare a reaction product containing an ethylene vinyl alcohol copolymer.

The system may further include a temperature control unit configured to control a temperature of the reactor to 90°C or lower.

The system may further include a purification unit configured to receive the reaction product from the reactor and separate the ethylene vinyl alcohol copolymer from the reaction product.

### DETAILED DESCRIPTION OF EXEMPLARY EMBODIMENTS

Embodiments are provided to more fully illustrate the present disclosure to a person having ordinary skill in the art, the following embodiments may be modified in various other forms, and the scope of the present disclosure is not limited to the following embodiments.

The method of preparing an ethylene vinyl alcohol copolymer according to one embodiment includes hydrolyzing an ethylene vinyl acetate copolymer in the presence of a catalyst in a solvent containing alcohol and water to prepare a reaction product containing an ethylene vinyl alcohol copolymer.

In a conventional method of industrially preparing an ethylene vinyl alcohol copolymer, an ethylene vinyl acetate copolymer is first synthesized through radical solution polymerization using vinyl acetate and ethylene as raw materials, and then is reacted with alcohol to prepare the ethylene vinyl alcohol copolymer.

This method fails to provide preparation of an ethylene vinyl alcohol with a high conversion rate in ordinary glassware or flasks because transesterification between the ethylene vinyl acetate (EVA) copolymer and alcohol is a reversible reaction, which requires continuous removal of alkyl acetate obtained as a by-product in order to increase the conversion rate of the ethylene vinyl alcohol (EVOH) copolymer. Further, this method has a difficulty in preparing an ethylene vinyl alcohol copolymer using an ethylene vinyl acetate copolymer because high pressure and high temperature conditions are required in order for the ethylene vinyl alcohol copolymer with a high conversion rate to be present in a solution state rather than precipitating in the reaction distillation column.

On the other hand, in the present disclosure, an ethylene vinyl alcohol copolymer is prepared by hydrolyzing an ethylene vinyl acetate copolymer using a solvent containing alcohol and water. In this case, the hydrolysis is an irreversible reaction and enables preparation of an ethylene vinyl alcohol copolymer with a high conversion rate without distillation for separating the by-product. In addition, this increases the conversion rate even in batch reactors rather than columns and thus provides simple operation. The process may be possible under mild conditions because the copolymer is present in a solution state under atmospheric pressure conditions.

In one embodiment, the hydrolysis may be performed without precipitation at a temperature of 90°C or lower. For example, the hydrolysis may be performed at a temperature from 50°C to 80°C or from 60°C to 80°C. When the hydrolysis is performed within the range of the temperature defined above, the reaction is completed at a sufficient reaction rate without precipitation and occurs in a liquid phase, which is advantageous for a continuous process.

The hydrolysis may be performed under pressure conditions of 1 bar to 3 bar. For example, the hydrolysis may be performed at 1 bar to 2 bar or under atmospheric pressure conditions. According to the present disclosure, an ethylene vinyl alcohol copolymer with a high conversion rate may be continuously prepared even under mild pressure conditions, especially atmospheric pressure conditions, and the reaction may be performed in a liquid phase without precipitation of the ethylene vinyl alcohol copolymer.

In one embodiment, the catalyst may include at least one selected from the group consisting of alkali metal hydroxide, alkali metal alkoxide, alkali metal alkylate, alkali metal alcoholate, and carboxylic acid, but is not limited thereto. For example, the catalyst may include at least one selected from the group consisting of alkali metal hydroxide such as sodium hydroxide and potassium hydroxide; alkali metal ethoxide such as sodium methoxide and potassium methoxide; alkali metal alkylate such as sodium methylate, sodium ethylate, potassium methylate, and lithium methylate; alkali metal alcoholate such as sodium methanolate, sodium ethanolate, sodium isopropanolate, and sodium n-butanolate; and carboxylic acid such as acetic acid, sulfuric acid, and hydrochloric acid.

The catalyst is dispersed in a solvent containing alcohol and water, and easily contacts the ethylene vinyl acetate copolymer, thereby facilitating the conversion of the ethylene vinyl acetate copolymer into an ethylene vinyl alcohol copolymer through hydrolysis.

The catalyst may be added in an amount of 5 to 50 parts by weight, 10 to 40 parts by weight, or 20 to 30 parts by weight based on 100 parts by weight of the ethylene vinyl acetate copolymer. By adding the catalyst in the amount within the range defined above, the hydrolysis of the ethylene vinyl acetate copolymer can be effectively performed, the production of a large amount of waste water in the subsequent washing process due to the use of an excessive amount of catalyst can be prevented, and problems such as discoloration or poor appearance in articles due to catalyst residues present therein can be prevented.

In one embodiment, the solvent may be a mixture of alcohol and water in an appropriate ratio. For example, the solvent may contain alcohol and water at a weight ratio of 3:1 to 3:5. As a specific example, the solvent may contain alcohol and water at a weight ratio of 3:1 to 3:4, 3:1 to 3:3, or 3:1.5 to 3:3. When a mixture of alcohol and water at a weight ratio within the above range is used as the solvent, it can dissolve not only the ethylene vinyl acetate copolymer but also the ethylene vinyl alcohol copolymer under mild pressure and temperature conditions of 90°C or less, thereby continuously preparing an ethylene vinyl alcohol copolymer with a high conversion rate through a liquid phase process without separation of by-products during the reaction.

The alcohol may be a C1 to C4 alcohol. For example, the alcohol may include at least one of ethanol, methanol, propanol, isopropanol, or butanol. In a specific embodiment, the alcohol is ethanol.

The ethylene vinyl acetate copolymer may be added in an amount of 10 to 50 parts by weight based on 100 parts by weight of the solvent. For example, the ethylene vinyl acetate copolymer may be added in an amount of 10 to 35 parts by weight or 10 to 25 parts by weight based on 100 parts by weight of the solvent. By adjusting the contents of the solvent and ethylene vinyl acetate copolymer within the range defined above, a viscous product with sufficient fluidity can be obtained and production with economic efficiency can be secured.

The ethylene vinyl acetate copolymer may have a weight average molecular weight (Mw) of 50,000 g/mol to 500,000 g/mol or 100,000 g/mol to 400,000 g/mol. When an ethylene vinyl alcohol copolymer is prepared by hydrolyzing an ethylene vinyl acetate copolymer having a weight average molecular weight within the range defined above, a product with sufficient heat resistance and mechanical resistance can be obtained.

The ethylene vinyl acetate copolymer may consist of 20 mol% to 40 mol% of ethylene and 60 mol% to 80 mol% of vinyl acetate. For example, the ethylene vinyl acetate copolymer may consist of 28 mol% to 32 mol% of ethylene and 68 mol% to 72 mol% of vinyl acetate. When an ethylene vinyl alcohol copolymer is prepared by hydrolyzing an ethylene vinyl acetate copolymer having a composition within the above range, a product having good enough oxygen barrier properties and fluidity for application to food packaging materials can be obtained.

In one embodiment, the ethylene vinyl acetate copolymer may be converted into the ethylene vinyl alcohol copolymer by hydrolysis in a solvent containing alcohol and water in the presence of a catalyst. Here, the ethylene vinyl acetate copolymer may refer to a copolymer having ethylene-derived units and vinyl acetate-derived units, and the ethylene vinyl alcohol copolymer may refer to a copolymer having ethylene-derived units and vinyl alcohol-derived units.

The hydrolysis is a saponification reaction in the presence of the catalyst and some or all of the vinyl acetate-derived units in the ethylene vinyl acetate copolymer are converted into repeat units containing hydroxyl groups.

In one embodiment, the ethylene vinyl alcohol copolymer contained in the reaction product may consist of 20 mol% to 40 mol% of ethylene and 60 mol% to 80 mol% of vinyl alcohol. For example, the ethylene vinyl alcohol copolymer may consist of 25 mol% to 35 mol% of ethylene and 65 mol% to 75 mol% of vinyl alcohol, or 28 mol% to 32 mol% of ethylene and 68 mol% to 72 mol% of vinyl alcohol. The ethylene vinyl alcohol copolymer having the composition defined above enables preparation of a product with oxygen barrier properties and fluidity applicable to food packaging materials.

In one embodiment, the conversion rate, i.e., saponification degree, of the ethylene vinyl alcohol copolymer in the reaction product may be 90% or more, 95% or more, or 99.9% or more. Using the method according to the present disclosure, it is possible to continuously prepare an ethylene vinyl alcohol copolymer having a high conversion rate owing to the irreversible reaction even if by-products generated during the reaction are not removed.

The ethylene vinyl alcohol copolymer may be present in a liquid phase in the reaction product. As described above, by using a solvent containing alcohol and water, not only the ethylene vinyl acetate copolymer as the raw material, but also ethylene vinyl alcohol copolymer as the target product, are present in a liquid state even without high pressure conditions, thereby providing easy preparation through a continuous process.

In one embodiment, the method may further include separating the ethylene vinyl alcohol copolymer from the reaction product obtained through the reaction.

The reaction product may include a solvent, unreacted residues, by-products, and an ethylene vinyl alcohol copolymer and the ethylene vinyl alcohol copolymer may be separated from the reaction product through a typical purification process. In addition, the reaction product may be easily handled due to the low temperature and pressure during the hydrolysis.

A system for preparing an ethylene vinyl alcohol copolymer according to an embodiment includes a reactor configured to receive a solvent containing alcohol and water, and an ethylene vinyl acetate copolymer and to hydrolyze the ethylene vinyl acetate copolymer in the solvent in the presence of a catalyst to prepare a reaction product containing an ethylene vinyl alcohol copolymer.

In one embodiment, the reactor may be selected from a variety of reactors such as glassware or batch reactors rather than columns. Specifically, since an ethylene vinyl alcohol copolymer is prepared from the ethylene vinyl acetate copolymer through hydrolysis, which is an irreversible reaction, rather than through transesterification between the ethylene vinyl acetate copolymer and alcohol, the necessity to continuously remove alkyl acetate by-products to increase the conversion rate during the reaction can be eliminated and thus an ethylene vinyl alcohol copolymer with a high conversion rate can be prepared using glassware or a batch reactor.

The reactor may include a raw material supply line. The raw material may include a catalyst, a solvent, and an ethylene vinyl acetate copolymer. Here, the raw material supply line may be provided as a line configured to supply each of the catalyst, the solvent, and the ethylene vinyl acetate copolymer and may be connected to the reactor, or the respective lines may be united into one line which is connected to the reactor.

The reactor may include a reaction product discharge line. The reaction product may include the solvent, the unreacted residues, the by-products, and the ethylene vinyl alcohol copolymer.

The preparation system may further include a temperature control unit configured to control the temperature of the reactor to 90°C or lower. For example, the temperature of the reactor may be controlled within a temperature range of 50°C to 80°C or 60°C to 80°C. When the hydrolysis is performed in the above temperature range, the hydrolysis may occur at a sufficient reaction rate without precipitation and the reaction is performed in a liquid phase, which is advantageous for a continuous process.

The pressure of the reactor may be controlled to the range of 1 bar to 3 bar. For example, the pressure of the reactor may be controlled within a range of 1 bar to 2 bar, or atmospheric pressure. According to the present disclosure, an ethylene vinyl alcohol copolymer with a high conversion rate may be continuously produced even under the mild pressure conditions, especially atmospheric pressure conditions and the reaction may be performed in a liquid phase without precipitation of the ethylene vinyl alcohol copolymer.

The preparation system may further include a purification unit configured to receive the reaction product from the reactor and separate the ethylene vinyl alcohol copolymer from the reaction product. Specifically, the reaction product discharged through the reaction product discharge line may be supplied to the purification unit and the purification unit may separate the ethylene vinyl alcohol copolymer, which is the target product, from the reaction product.

Hereinafter, specific examples of the present disclosure will be described. However, the examples described below are only provided to exemplify or illustrate the present disclosure in detail and should not be construed as limiting the scope of the present disclosure. In addition, other details that may be sufficiently technically conceived by those skilled in the art will be not described.

### (Preparation of ethylene vinyl alcohol copolymer)

### Example 1

Sodium hydroxide as a catalyst, a solvent containing ethanol and water at a weight ratio of 2:1, and 15 parts by weight of an ethylene vinyl acetate copolymer, based on 100 parts by weight of the solvent, were fed to a reactor, and hydrolysis was performed to prepare a reaction product containing an ethylene vinyl alcohol copolymer. At this time, the temperature of the reactor was adjusted to 80°C and the pressure was adjusted to atmospheric pressure.

Then, the ethylene vinyl alcohol copolymer was separated from the reaction product. The obtained ethylene vinyl alcohol copolymer was found to contain 31 mol% of ethylene-derived units and 69 mol% of vinyl alcohol-derived units.

### Example 2

An ethylene vinyl alcohol copolymer was prepared in the same manner as in Example 1, except that the temperature of the reactor was adjusted to 60°C.

### Example 3

An ethylene vinyl alcohol copolymer was prepared in the same manner as in Example 1, except that the temperature of the reactor was adjusted to 40°C.

### Example 4

An ethylene vinyl alcohol copolymer was prepared in the same manner as in Example 1, except that a solvent containing ethanol and water at a weight ratio of 3:1 was used.

### Example 5

An ethylene vinyl alcohol copolymer was prepared in the same manner as in Example 1, except that a solvent containing ethanol and water at a weight ratio of 3:3 was used.

### Example 6

An ethylene vinyl alcohol copolymer was prepared in the same manner as in Example 1, except that a solvent containing ethanol and water at a weight ratio of 3:5 was used.

### Comparative Example 1

An ethylene vinyl alcohol copolymer was prepared in the same manner as in Example 1, except that ethanol was used as the solvent.

### Comparative Example 2

An ethylene vinyl alcohol copolymer was prepared in the same manner as in Example 1, except that ethanol was used as the solvent, and the reaction pressure and the reaction temperature were adjusted to 6 bar and 130°C, respectively, using a high-pressure reactor.

### Test 1: Measurement of conversion of ethylene vinyl alcohol copolymer

The conversion rates of the ethylene vinyl alcohol (EVOH) copolymers prepared in Examples 1 to 6 and Comparative Examples 1 to 2 were measured. Specifically, the prepared ethylene vinyl alcohol (EVOH) copolymer was separated from the solution and dried, and H-NMR was measured to calculate the conversion rate from the areas of the vinyl acetate peak and the vinyl alcohol peak. Here, the calculation was performed using the following Equation 1 and the results are shown in the following Table 1: Conversion rate (%) = (area of vinyl alcohol peak) / (area of vinyl alcohol peak + area of vinyl acetate peak) * 100

### Test 2: Measurement of precipitation amount of ethylene vinyl alcohol copolymer in reaction product

After the reaction of Examples 1 to 6 and Comparative Examples 1 to 2 was performed for 2 hours, the amount of precipitation of the ethylene vinyl alcohol copolymer formed in the reaction product was measured. Specifically, the reaction solution was filtered through a filter while maintaining the temperature, the weight of the product residue on the filter was measured and was compared with the amount of the ethylene vinyl alcohol copolymer precipitated in Comparative Example 1 to calculate an amount of the precipitated ethylene vinyl alcohol copolymer. The results are shown in Table 1 below. Here, the precipitation amount was calculated based on 100% of the amount of the ethylene vinyl alcohol copolymer precipitated in Comparative Example 1.

**[Table 1]**

| | Example 1 | Example 2 | Example 3 | Example 4 | Example 5 | Example 6 | Compara tive Example 1 | Compara tive Example 2 |
|---|---|---|---|---|---|---|---|---|
| Conversi on rate (%) | 99.7 | 99.5 | 65.3 | 72.9 | 99.6 | 78.4 | 87.6 | 95 |
| Precipitat ion amount (%) | 0 | 0 | 87.8 | 67.2 | 0 | 71.6 | 100 | 100 |

As can be seen from Table 1, the composition of alcohol and water in Examples 1 and 2 enables the ethylene vinyl acetate (EVA) copolymer and the ethylene vinyl alcohol (EVOH) copolymer with a high conversion rate to be dissolved at atmospheric pressure, so that the copolymer is present in a solution state during the reaction, i.e., from the beginning to the ending of the reaction and is easily handled in a continuous process. In addition, the conversion rate through the hydrolysis was found to be about 99% or more. Meanwhile, in Example 3, in which the reaction temperature was lowered, and in Examples 4 and 6, in which the composition of alcohol and water was changed, the conversion rate was slightly lowered and the amount of precipitation was slightly increased compared to Example 1.

On the other hand, in Comparative Example 1, the solution state was maintained at the beginning of the reaction, but as the conversion rate of the ethylene vinyl alcohol copolymer increased, the ethylene vinyl alcohol copolymer precipitated in a solid phase, which caused deterioration in contact and dispersion with the sodium hydroxide catalyst. In addition, a reverse reaction occurred in the reversible reaction and thus the conversion rate was about 80% to 90% due to the difficulty to remove alkyl acetate, a by-product, at the temperature of 80°C.

In addition, in Comparative Example 2, a high-pressure reactor was used in order to maintain 130°C, the minimum temperature to dissolve the ethylene vinyl alcohol copolymer in ethanol, and the internal pressure and temperature of the reactor was maintained at 6 bar and 130°C, respectively, in order to maintain the ethylene vinyl alcohol copolymer in a solution phase. However, when the temperature decreased, the ethylene vinyl alcohol copolymer precipitated, thus disadvantageously making it difficult to handle the reaction product at high temperatures and pressures, and providing a conversion rate of about 95% due to the low removal rate of by-products.

As is apparent from the above description, when an ethylene vinyl alcohol copolymer is prepared using hydrolysis rather than transesterification according to the present disclosure, the hydrolysis is an irreversible reaction, thus obtaining an ethylene vinyl alcohol copolymer with a high conversion rate even without distillation and separation of by-products.

In addition, when an ethylene vinyl alcohol copolymer according to the present disclosure is prepared, operation is simple because the conversion rate may be increased even in a batch reactor rather than a column, and the process may be possible under mild conditions because the reaction system contains alcohol and water, and thus an ethylene vinyl alcohol copolymer with a high conversion rate is present in a solution state under atmospheric pressure conditions.

Although preferred embodiments of the present disclosure have been disclosed for illustrative purposes, those skilled in the art will appreciate that various modifications, additions, and substitutions are possible without departing from the scope and spirit of the disclosure as disclosed in the accompanying claims.

## Claims

1. A method of preparing an ethylene vinyl alcohol copolymer comprising hydrolyzing an ethylene vinyl acetate copolymer in the presence of a catalyst in a solvent containing alcohol and water to prepare a reaction product containing an ethylene vinyl alcohol copolymer.

2. The method according to claim 1, wherein the hydrolysis is performed without precipitation at a temperature of 90°C or lower.

3. The method according to claim 1, wherein the catalyst comprises at least one selected from the group consisting of alkali metal hydroxide, alkali metal alkoxide, alkali metal alkylate, alkali metal alcoholate, and carboxylic acid.

4. The method according to claim 1, wherein the alcohol is a C1 to C4 alcohol.

5. The method according to claim 1, wherein the solvent contains alcohol and water at a weight ratio of 3:1 to 3:5.

6. The method according to claim 1, wherein the ethylene vinyl acetate copolymer is added in an amount of 10 to 50 parts by weight based on 100 parts by weight of the solvent.

7. The method according to claim 1, wherein the ethylene vinyl acetate copolymer has a weight average molecular weight (Mw) of 50,000 g/mol to 500,000 g/mol.

8. The method according to claim 1, wherein the hydrolysis is performed at a temperature of 50°C to 80°C, and the hydrolysis is performed at a pressure of 1 bar to 3 bar.

9. The method according to claim 1, wherein the ethylene vinyl alcohol copolymer comprises 20 mol% to 40 mol% of ethylene and 60 mol% to 80 mol% of vinyl alcohol.

10. The method according to claim 1, wherein a conversion rate of the ethylene vinyl alcohol copolymer is 90% or more.

11. The method according to claim 1, wherein the ethylene vinyl alcohol copolymer is present in a liquid phase in the reaction product.

12. The method according to claim 1, further comprising separating the ethylene vinyl alcohol copolymer from the reaction product.

13. A system for preparing an ethylene vinyl alcohol copolymer comprising a reactor configured to receive a solvent containing alcohol and water, and an ethylene vinyl acetate copolymer and to hydrolyze the ethylene vinyl acetate copolymer in the solvent in the presence of a catalyst to prepare a reaction product containing an ethylene vinyl alcohol copolymer.

14. The system according to claim 13, further comprising a temperature control unit configured to control a temperature of the reactor to 90°C or lower.

15. The system according to claim 13, further comprising a purification unit configured to receive the reaction product from the reactor and separate the ethylene vinyl alcohol copolymer from the reaction product.
